# EUROPEAN PATENT APPLICATION

(11) **EP 4 461 801 A1**
(43) Date of publication of application: **13.11.2024**
(21) Application number: 22918786.9
(22) Date of filing: 16.12.2022
(51) Int. Cl.: C12G 3/025, A23L 2/00, A23L 2/52, C12G 1/02, C12G 3/04

(54) **LOW-BRIX WINE-FLAVOURED BEVERAGE**

(30) Priority: 07.01.2022 JP 2022001645
(71) Applicant: Suntory Holdings Limited, Osaka-shi, Osaka 530-8203 (JP)
(72) Inventor: KATAOKA, Shun, Kawasaki-shi, Kanagawa 211-0067 (JP); NAKAMURA, Yuri, Kawasaki-shi, Kanagawa 211-0067 (JP)
(74) Representative: Vossius & Partner Patentanwälte Rechtsanwälte mbB
(86) International application number: PCT/JP2022/046340
(87) International publication number: WO 2023/132200

(57) **Abstract**

The present invention addresses the issue of increasing the wine-like drinking satisfaction of a non-alcoholic or low-alcohol, low-Brix, wine-flavoured beverage. In the present invention, the amount of sodium included is set to a specific range.

## Description

### TECHNICAL FIELD

The present invention relates to a non-alcoholic or low-alcoholic wine flavor beverage having a sodium content within a specific range and a low Brix value, and a method relating thereto.

### BACKGROUND ART

Non-alcoholic or low-alcoholic beverages are popular particularly among young people nowadays. In such a trend, non-alcoholic or low-alcoholic wine flavor beverages are being developed.

For example, PTL 1 discloses a technique for providing a wine flavor beverage, particularly a non-alcoholic or low-alcoholic wine flavor beverage, that has improved and enhanced wine-like flavor by regulating the compositional profile of organic acids.

PTL 2 discloses a technique for giving an impression of a fermented product to a wine flavor beverage by regulating the contents of specific higher alcohols and fatty acid esters.

### CITATION LIST

### PATENT LITERATURE

PTL 1: JP 2013-255490A
PTL 2: JP 2021-106526A

### SUMMARY OF INVENTION

### TECHNICAL PROBLEM

Under the influence of the trend toward health in these days, there is also a need to reduce the carbohydrate content of wine and wine flavor beverages. This also applies to non-alcoholic or low-alcoholic beverages. However, the inventors of the present invention have found that reduction in the carbohydrate content impairs wine-like full body.

In the technical art of beverages, the Brix is used as a measure for indicating the carbohydrate content. Accordingly, it can be said that a low carbohydrate content corresponds to a low Brix value. Therefore, an object of the present invention is to enhance wine-like full body of a non-alcoholic or low-alcoholic wine flavor beverage having a low Brix value.

### SOLUTION TO PROBLEM

The present inventors have found that sodium affects wine-like full body of a non-alcoholic or low-alcoholic wine flavor beverage having a low Brix value.

The present invention relates to, but is not limited to, the following.
1. A wine flavor beverage having an alcohol content of less than 3 v/v%, a sodium content of 70 to 950 mg/kg, and a Brix value of 5.8 or less.
2. The beverage according to item 1, wherein the sodium content is 120 to 800 mg/kg.
3. The beverage according to item 1 or 2, wherein the Brix value is 2.5 to 5.8.
4. A method for enhancing wine-like full body of a wine flavor beverage having an alcohol content of less than 3 v/v% and a Brix value of 5.8 or less, the method including the step of mixing ingredients such that the beverage has a sodium content of 70 to 950 mg/kg.

### ADVANTAGEOUS EFFECTS OF INVENTION

The present invention can enhance wine-like full body of a non-alcoholic or low-alcoholic wine flavor beverage having a low Brix value. Herein, "wine-like full body" means to have depth, body, richness, and thickness like those of an alcoholic beverage and also to give soft mouthfeel and refreshing aftertaste. The soft mouthfeel and refreshing aftertaste are features of the wine-like full body that other alcoholic beverages do not have.

### DESCRIPTION OF EMBODIMENTS

The beverage of the present invention and a method relating thereto will be described below.

Unless otherwise noticed, "ppm" as used herein means ppm in terms of weight/volume (w/v), which has the same meaning as of "mg/L."

### (Wine flavor beverage)

The present invention relates to a wine flavor beverage having an alcohol content of less than 3 v/v%.

The "wine flavor beverage" herein refers to a beverage having wine-like flavor. The "wine" herein means an alcoholic beverage that is produced by fermenting mainly grape juice.

The wine flavor beverage herein may be a beverage that has undergone fermentation by yeast or may not, as long as it has wine flavor. It may be a beverage that has undergone fermentation by a microorganism other than yeast, such as Lactic acid bacteria and oil-producing bacteria. It may also contain alcohol or may not. Examples of such beverages include a beverage containing wine; a beverage containing a wine extract obtained by concentrating wine; a beverage obtained by dealcoholization of wine and a beverage containing it; a beverage obtained by lactic fermentation of a fruit juice and a beverage containing it; and a beverage that imitates a taste of wine with a flavoring agent without use of wine or a wine extract. The method for producing the beverage and the ingredients and materials of the beverage are not particularly limited as long as the beverage has wine flavor.

The wine flavor beverage may be a beverage with red wine flavor or a beverage with white wine flavor. In either case, wine-like full body enhances the wine-likeness.

### (Alcohol)

Herein, the alcohol refers to ethyl alcohol (ethanol), unless otherwise noticed.

The wine flavor beverage of the present invention is a low-alcoholic or non-alcoholic beverage, and has an alcohol content of less than 3 v/v%. The alcohol content may be 2 v/v% or less, 1 v/v% or less, or 0.00 v/v%.

The alcohol content in the present invention may be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

Alternatively, the alcohol content may be measured using gas chromatography, in cases where the content is extremely small.

Any liquor can be used as a source of the alcohol for the beverage of the present invention. The liquor that can be used for this purpose is not particularly limited as long as it is drinkable as a general liquor, and examples thereof include distilled liquors such as whiskey, vodka, rum, shochu, and spirits; brewed beverage such as sake, wine, and beer; and mixed liquors such as liqueur.

### (Sodium)

The sodium content of the beverage of the present invention is 70 to 950 mg/kg, preferably 120 to 950 mg/kg, more preferably 120 to 800 mg/kg, even more preferably 120 to 600 mg/kg. Employing a content within such a range can enhance wine-like full body of the wine flavor beverage.

The sodium contained in the beverage of the present invention may be in the form of a sodium salt or sodium ion, and in this case, the mass thereof is substantially the same as that of its free form. The sodium content or concentration of the beverage (solution as a sample) of the present invention can be measured by a known method using an ICP emission spectrophotometer.

In the present invention, it is possible to add to the beverage sodium in the form of a salt that can be used for beverages and foods, or in a form that contains it abundantly, such as deep sea water or a seaweed extract.

Examples of the salt for incorporating sodium into the beverage of the present invention include sodium chloride, trisodium citrate, sodium gluconate, monosodium succinate, disodium succinate, sodium acetate, sodium DL-tartrate, sodium L-tartrate, sodium lactate, monosodium fumarate, and sodium DL-malate. Thus, in one embodiment, the beverage of the present invention contains one or more substance selected from the group consisting of sodium chloride, trisodium citrate, sodium gluconate, monosodium succinate, disodium succinate, sodium acetate, sodium DL-tartrate, sodium L-tartrate, sodium lactate, monosodium fumarate, and sodium DL-malate.

### (Brix)

The term "Brix" herein means the weight (g) of dissolved solids per 100 g of solution, which is generally determined by measuring a refractive index at 20°C using, for example, a saccharimeter or refractometer and converting it to a mass/mass percentage of a sucrose solution on the basis of the conversion table according to ICUMSA (International Commission for Uniform Methods of Sugar Analysis). A smaller Brix value of a beverage means a smaller concentration of dissolved solids including carbohydrates.

The beverage of the present invention has a smaller carbohydrate content, and its Brix value is 5.8 or less. A preferred example of the Brix value is 5.0 or less, or 4.5 or less. The lower limit of the Brix value is not particularly critical, and may be, for example, 1.0, 1.5, 2.0, 2.5, or 3.0. A preferred example of the range of the Brix value is 2.5 to 5.8, or 3.0 to 5.0. A beverage having such a small carbohydrate content tends to have poor full body; however, the present invention can enhance excellent wine-like full body in such cases.

### (Carbon dioxide)

The beverage of the present invention may contain carbon dioxide. The carbon dioxide can be introduced into the beverage by a general method known to those skilled in the art. For example, carbon dioxide may be dissolved in the beverage under pressure; carbon dioxide may be mixed with the beverage in a line using a mixer such as a carbonator available from GEA Tuchenhagen; the beverage may be sprayed into a tank filled with carbon dioxide so that the beverage absorbs the carbon dioxide; or the beverage may be mixed with carbonated water; however, the method is not limited thereto. The carbon dioxide pressure is adjusted by using these means as appropriately.

In cases where the beverage of the present invention contains carbon dioxide, the carbon dioxide pressure thereof is not particularly limited, and preferably 0.7 to 4.5 kgf/cm², more preferably 0.8 to 2.8 kgf/cm². In the present invention, the carbon dioxide pressure can be measured using a gas volume analyzer GVA-500A manufactured by KYOTO ELECTRONICS MANUFACTURING CO., LTD. For example, the temperature of a sample is adjusted to 20°C; in the gas volume analyzer, air is removed (sniffed) from the container, followed by shaking; and then the carbon dioxide pressure is measured. Unless otherwise noticed, the carbon dioxide pressure herein means a carbon dioxide pressure at 20°C.

### (Other ingredients)

In addition, any additives commonly incorporated into beverages may be incorporated into the beverage of the present invention, including flavors, vitamins, dyes, antioxidants, preservatives, seasonings, extracts, pH adjusters, citric acid, and quality stabilizers, as long as they do not impair the effect of the present invention.

In one embodiment, the beverage of the present invention is free of any high-intensity sweetener, or has a content thereof as small as possible, in view of pursuing a more natural taste. For example, the high-intensity sweetener content of the beverage may be 110 ppm or less. This concentration can be measured by a known method such as HPLC method.

The term "high-intensity sweetener" as used herein encompasses natural sweeteners and synthesized sweeteners that have a stronger sweetness than sucrose (for example, that is several to several hundred times sweeter than sucrose). Examples of such a high-intensity sweetener include peptide sweeteners, such as aspartame and allitame; glycoside sweeteners, such as stevia sweeteners (including stevia extract, and enzymatically treated stevia obtained by enzymatically treating stevia and adding glucose, and Rebaudioside A, which has the best sweetness among sweet components of stevia) and Glycyrrhiza extract; sucrose derivatives, such as sucralose; and synthetic sweeteners, such as acesulfame K and saccharin.

### (Packed beverage)

The beverage of the present invention can be provided in a packed form. Examples of the form of a container for packing include, but not limited to, a metal container such as a can, a PET bottle, a paper container, a bottle, and a pouch. A sterilized and packed product can be produced by, for example, a method including filling the beverage of the present invention into a container and then carrying out heat sterilization such as retort sterilization, or a method including sterilizing the beverage and then filling it into a container.

### (Method)

Another aspect of the present invention is a method for producing a wine flavor beverage having an alcohol content of less than 3 v/v%. The method includes the step of mixing ingredients such that the beverage has a sodium content of 70 to 950 mg/kg. The ingredients include a sodium-containing material (such as a sodium salt and a fruit juice), and water, if necessary. Other ingredients are obvious from the description for the beverage hereinabove. This method can enhance wine-like full body of a wine flavor beverage having an alcohol content of less than 3 v/v% and a Brix value of 5.8 or less, and accordingly, in another aspect, the method is also a method for enhancing wine-like full body of the above-described beverage.

The method for adjusting the sodium content of the beverage is obvious from the descriptions for the beverage hereinabove. The timing thereof is not limited. For example, the above-described steps may be carried out simultaneously or separately, or the steps may be swapped for each other in the order. The beverage finally obtained has only to satisfy the above-described requirements. The preferred ranges of the contents of the above-described ingredients, etc. are as described above for the beverage. Specific examples and amounts of other additional ingredients and parameters are also as described above for the beverage.

### (Numeric range)

For the sake of clearness, numeric ranges herein include their end points, or in other words, the lower limits and the upper limits. For example, a range represented by "1 to 2" includes 1 and 2.

### EXAMPLES

The contents of the present invention will now be described in detail by way of Examples of the present invention, but the present invention is not limited to Examples below.

### (Test Example 1) Influence of Brix and sodium (1)

Wine flavor beverages having various Brix values and sodium contents were prepared, and their tastes were checked.

Specifically, to water were added a given amount of a wine extract (obtained from white wine: 1 g/kg of the resulting beverage sample) and an acidifier (malic acid) and also various amounts of a sodium salt (trisodium citrate) and sucrose to prepare beverage samples according to the formulations shown in Table 1 below. Since trisodium citrate has a smaller impact of the taste of the salt itself, it was used for the experiment. In each sample obtained, the alcohol content was 0.00 v/v%, and the acidity (in terms of tartaric acid) was 0.40 g/100 ml.

On the beverage samples obtained, sensory evaluation was made by trained members of a panel to evaluate "wine-like full body" and "sweetness." For each evaluation item, the members rated samples on a 5-point scale from 1 to 5 (as the full body or the sweetness is greater, the score is larger), and the average was obtained from the resulting evaluation scores. For "wine-like full body," an average of 2.5 or more was regarded as a passing score, and for "sweetness," an average of 2.5 or less was regarded as a passing score.

In order to reduce differences in evaluations among individuals, the specialist members established a common perception of the relationship between the scores and tastes in advance, using standard samples corresponding to respective scores.

Results are shown in Table 1.

**[Table 1]**

| Sodium content [mg/kg] | 60 | 120 | 200 | 300 | 400 | 600 | 800 | 1000 | 1500 | 60 | 120 |
|---|---|---|---|---|---|---|---|---|---|---|---|
| Brix | 4.0 | 4.0 | 4.0 | 4.0 | 4.0 | 4.0 | 4.0 | 4.0 | 4.0 | 2.0 | 2.0 |
| Wine-like full body | 2.25 | 2.75 | 3.50 | 4.75 | 4.00 | 3.00 | 2.50 | 1.75 | 1.00 | 1.75 | 2.50 |
| Sweetness | 2.50 | 2.50 | 2.50 | 2.50 | 2.00 | 1.75 | 1.25 | 1.25 | 1.00 | 1.75 | 2.50 |

A wine flavor beverage that has a higher Brix value tends to exhibit sufficient wine-like full body. On the other hand, Test Example 1 shows that a wine flavor beverage that has a Brix value as small as 5.8 or less tends to have insufficient wine-like full body, and that the wine-like full body can be enhanced by adjusting the sodium content to be within a given range.

### (Test Example 2) Influence of Brix and sodium (2)

The same experiment as in Test Example 1 was carried out on wine flavor beverages obtained by diluting a red wine or white wine.

Specifically, a red wine and a white wine made in Chile were each about 13-fold diluted with water to adjust the alcohol content to about 1.0 v/v%. Then, to each of diluted wines (red and white) were added a given amount of an acidifier (malic acid) and also various amounts of a sodium salt (trisodium citrate) and a sweetener (sucrose) to prepare beverage samples (red wine-containing beverage and white wine-containing beverage) according to the formulations shown in Table 2 below. In each sample obtained, the acidity (in terms of tartaric acid) was 0.40 g/100 ml.

Then, sensory evaluation was made in the same manner as in Test Example 1 on the beverages obtained. Results are shown in Table 2.

**[Table 2]**

| | Red wine-containing beverage | | White wine-containing beverage | |
|---|---|---|---|---|
| Sodium content [mg/kg] | 60 | 400 | 60 | 400 |
| Brix | 4.0 | 4.0 | 4.0 | 4.0 |
| Wine-like full body | 2.00 | 4.25 | 1.25 | 3.50 |
| Sweetness | 2.75 | 2.00 | 2.50 | 2.00 |

In wine flavor beverages obtained by diluting wines, the same tendency as in Test Example 1 was found. The similar result was obtained not only in cases where a white wine was used but also cases where a red wine was used.

## Claims

1. A wine flavor beverage having an alcohol content of less than 3 v/v%, a sodium content of 70 to 950 mg/kg, and a Brix value of 5.8 or less.

2. The beverage according to claim 1, wherein the sodium content is 120 to 800 mg/kg.

3. The beverage according to claim 1 or 2, wherein the Brix value is 2.5 to 5.8.

4. A method for enhancing wine-like full body of a wine flavor beverage having an alcohol content of less than 3 v/v% and a Brix value of 5.8 or less, the method comprising
the step of mixing ingredients such that the beverage has a sodium content of 70 to 950 mg/kg.
